# EUROPÄISCHE PATENTANMELDUNG

(11) **EP 0 585 809 A1**
(43) Veröffentlichungstag der Anmeldung: **09.03.1994**
(21) Anmeldenummer: 93113634.5
(22) Anmeldetag: 26.08.1993
(51) Int. Cl.: G02B 6/44

(54) **Endverzweiger-Anordnung für Signal-Übertragungskabel, insbesondere aus Glasfaserleiter**

(30) Priorität: 26.08.1992 CH 2644/92
(71) Anmelder: Reichle + De-Massari AG Elektro-Ingenieure, 8620 Wetzikon (CH)
(72) Erfinder: Reichle, Hans, CH-8620 Wetzikon (CH)
(74) Vertreter: Petschner, Goetz

(57) **Zusammenfassung**

Die Endverzweiger-Anordnung für Signal-Uebertragungskabel, insbesondere aus Glasfaserleiter, umfasst eine Mehrzahl Stecker in einem Steckerfeld (10) zur steckbaren Verbindung von netzseitigen und anwenderseitigen Glasfaserleitern. Hierbei befindet sich das Steckerfeld (10) in einem schwenkbar und herausnehmbar in einem Gehäuse (1) eingesetzten Rahmen (2), welcher Rahmen (2) beidseitig je eine netzseitige resp. anwenderseitige Mehrfach-Spleisskassette (3,3') trägt und begrenzte Raumabschnitte (4,4') für die Aufnahme von Glasfaserleiterreserven der mit den Steckern des Steckerfeldes (10) verbundenen Glasfasern (6, 6') aufweist, wobei der im Gehäuse (1) eingesetzte Rahmen (2) mit der Gehäuserückwand (7) einen Raum (8) begrenzt zur schlaufen- resp. kreisförmigen Aufnahme von Glasfaser-Arbeits- resp. -Spleissreserven des netzseitigen (11) resp. anwenderseitigen Uebertragungskabels (12).

## Beschreibung

Die vorliegende Erfindung betrifft eine Endverzweiger-Anordnung für Signal-Uebertragungskabel, insbesondere aus Glasfaserleiter, mit einer Mehrzahl Stecker in einem Steckerfeld zur steckbaren Verbindung von netzseitigen und anwenderseitigen Glasfaserleitern.

In den Signal-Uebertragungsbereichen der Technik, wie Telefonie, On-Line-Systeme und dgl. gewinnen Glasfaserkabel ständig an Bedeutung, wie auch der Umfang an Anwendern zunimmt, die von der gleichen Netzseite her zu versorgen sind.

Die Verbindung zwischen den netzseitigen und den anwenderseitigen Glasfaserleitern erfolgt dabei über Stecker in einem Steckerfeld.

Da es aber sehr schwierig ist, die Einzelleiterenden an Ort mit den Steckerelementen ausreichend dämpfungsarm zu verbinden, ist man dazu übergegangen, die Stecker fabrikmässig mit Glasfaserleiter zu verbinden, um an Ort dann diese Leiter mit jenen der Uebertragungskabel zu verspleissen (verschweissen, verkleben).

Die EU-Patentanmeldung Nr. 91114312.1 der gleichen Anmelderin beschreibt bereits eine Endverschluss-Anordnung der vorgenannten Art, bei der netzseitig die Leiter des Uebertragungskabels mit den Leitern an Steckerteilen verspleisst werden und sich das Ganze in Kassetten befindet, welche printplattenartig in Gestellen zusammengefasst werden. Frontseitig können dann die anwenderseitigen Glasfaserleiter, welche die Gegenstecker tragen, gesteckt werden.

Problematisch ist hierbei sowohl das anwenderseitig offene, ungeschützte Steckerfeld als auch die dämpfungsarme Anspleissung der betreffenden Steckerteile an den anwenderseitigen Glasfaserleitern.

Aufgabe der Erfindung ist nunmehr, eine Endverzweiger-Anordnung der vorgenannten Art zu schaffen, bei welcher das Steckerfeld sowohl netzseitig als auch anwenderseitig schützbar ist und ferner fabrikmässig mit Glasfaserleitern verbundene Stecker sowohl netzseitig als auch anwenderseitig mit den Glasfaserleitern der netzseitigen resp. anwenderseitigen Uebertragungskabel an Ort verspleissbar sind.

Dies wird erfindungsgemäss dadurch erreicht, dass sich das Steckerfeld in einem schwenkbar und herausnehmbar in einem Gehäuse eingesetzten Rahmen befindet, welcher Rahmen beidseitig je eine netzseitige resp. anwenderseitige Mehrfach-Spleisskassette trägt und begrenzte Raumabschnitte für die Aufnahme von Glasfaserleiterreserven der mit den Steckern des Steckerfeldes verbundenen Glasfasern aufweist, wobei der im Gehäuse eingesetzte Rahmen mit der Gehäuserückwand einen Raum begrenzt zur schlaufen- resp. kreisförmigen Aufnahme von Glasfaser-Arbeits- resp. -Spleissreserven des netzseitigen resp. anwenderseitigen Uebertragungskabels.

Durch diese Massnahmen ist es nunmehr möglich, neben einem optimalen Schutz des Steckerfeldes im, selbstverständlich verschliessbaren, Gehäuse eine optimale Zugänglichkeit der Spleissbereiche durch Herausnahme des Steckerrahmens mit den Spleisskassetten zu erreichen, ohne dass Glasfaserkabel resp. Glasfaserleiter ihren Mindest-Krümmungsradius unterschreiten können.

Eine bevorzugte Ausführungsform des Erfindungsgegenstandes besteht hierbei darin, dass im Kabelreserven aufnehmenden Raum Führungsschikanen vorgesehen sind zur Parallelführung der zum Rahmen hin verlaufenden Kabelabschnitte entlang der Rahmen-Schwenkachse.

Für Erdung und Netzstromversorgung ist es zudem von Vorteil, wenn das Gehäuse ausserhalb des Rahmens ein Auskreuzungsfach für hindurchgeführte Netzstromkabel aufweist, wobei dann vorteilhaft sich im Auskreuzungsfach Mittel für den Endverschluss des Netzstromkabels befinden.

Beispielsweise Ausführungsformen des Erfindungsgegenstandes sind nachfolgend anhand der Zeichnung näher erläutert. Es zeigen:
- Fig. 1: in schaubildartiger Darstellung in Frontansicht eine erfindungsgemässe Endverzweiger-Anordnung mit herausgenommenem Steckerfeld-Rahmen;
- Fig. 2: die Anordnung gemäss Fig. 1 mit nach vorn ausgeschwenktem Steckerfeld-Rahmen; und
- Fig. 3: die Anordnung gemäss Fig. 1 mit innenliegendem Steckerfeld-Rahmen.

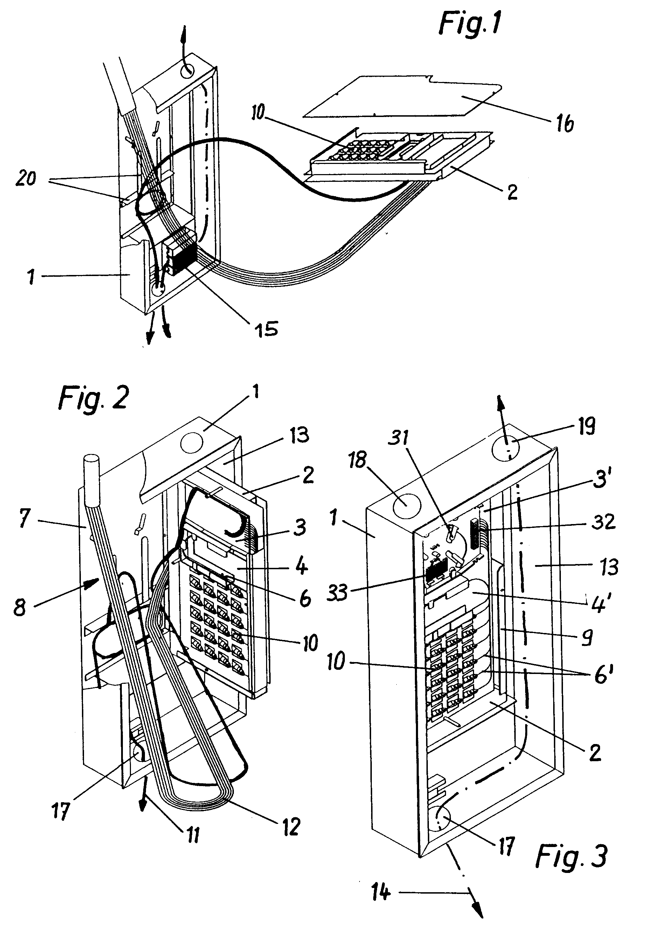

Die Endverzweiger-Anordnung gemäss den Fig. 1 bis 3 umfasst ein Steckerfeld 10 mit einer Mehrzahl handelsüblicher Stecker, welche in der Regel fabrikmässig mit Glasfaserleitern von einigen Metern Länge dämpfungsarm verbunden sind. Dieses Steckerfeld 10 befindet sich in einem Schwenkbar und herausnehmbar in einem Gehäuse 1 eingesetzten Rahmen 2. Letzterer trägt beidseitig je eine netzseitige resp. anwenderseitige Mehrfach-Spleisskassette 3 resp. 3' etwa bekannter Bauart.

Raum-mechanisch bilden die Kassetten 3,3' in bekannter Art einen schalenförmigen Spleiss-Raum 31, in welchem ein rechenförmiger Zugentlastungs-Steg 32 für Glasfaserleiter sowie eine Spleiss-Aufnahme 33 angeordnet sind. Dieser Spleiss-Raum dient zum zugentlasteten Absetzen und Spleissen von einzelnen netzseitigen resp. anwenderseitigen Glasfaserleitern mit jenen der Stecker. Unter Niederhaltern im Spleiss-Raum können 2 bis 3 m lange Spleissreserven dieser Glasfaserleiter lose eingelegt werden.

Diese Spleissreserve-Leiter legen sich dabei durch ihre mechanische Eigen-Vorspannung selbsttätig an radial gekrümmte Faserführungs-Innenflächen des Spleiss-Raumes an.

Weiter begrenzt der Rahmen 2 beidseitig Raumabschnitte 4 resp. 4' für die Aufnahme weiterer Glasfaserleiterreserven der mit den betreffenden Steckern des Steckerfeldes 10 verbundenen Glasfasern 6 resp. 6'.

Der im Gehäuse 1 eingesetzte Rahmen 2 begrenzt mit der Gehäuserückwand 7 einen weiteren Raum 8 zur schlaufenresp. kreisförmigen Aufnahme von Glasfaser-Arbeits- resp. Spleissreserven des netzseitigen 11 resp. anwenderseitigen Uebertragungskabels 12.

Vorzugsweise ist die der Gehäuserückwand 7 zugewendete Rahmenseite die netzseitige und die offenseitige Rahmenseite die anwenderseitige, welche mittels Platte 16 o. dgl. abdeckbar ist (Fig. 1).

Wie aus den Figuren entnehmbar, kann das netzseitige Uebertragungskabel 11 durch eine Oeffnung 17 und das anwenderseitige Uebertragungskabel 12 durch eine Oeffnung 18 in das Gehäuse 1 eingebracht werden.

Im die Kabelreserven aufnehmenden Raum 8 sind ferner Führungsschikanen 9 vorgesehen zur Parallelführung der zum Rahmen 2 hin verlaufenden Kabelabschnitte entlang der Rahmen-Schwenkachse (nicht gezeigt), um einen Zug auf die Uebertragungskabel beim Ausschwenken des Rahmens 2 zu verhindern.

Weitere Führungsmittel 20 im Kabelreserven aufnehmenden Raum 8 sorgen für die Einhaltung minimaler Krümmungsradien für die Glasfasern. Durch Herausnehmen des Rahmens 2 und Nachschleppen der Uebertragungskabel nimmt die Vorspannung der Arbeitsreserven zu durch Zusammenziehen im Krümmungsradius, ohne dass Zug auf die Spleiss-Stellen entsteht, da ein Nachlaufen der Uebertragungskabel erfolgt. Beim Zurücksetzen des Rahmen 2 reguliert sich die Lage der Glasfaserkabel-Reserve von selbst unter Wirkung deren wieder abnehmenden Eigenvorspannung. Es erfolgt dabei ein praktisch reibungsfreies Zurückgleiten der Glasfaserkabel.

Für eine allfällige Erdung und Netzstromversorgung weist das Gehäuse 1 zudem ausserhalb des Rahmens 2 ein Auskreuzungsfach 13 für das durch die Oeffnungen 17 und 19 hindurchzuführende Netzstromkabel 14 auf, wobei sich im genannten Fach Mittel 15 (Fig. 1) für den Endverschluss von Erdungskabel und/oder Netzstromkabel 14 befinden können.

Aus dem Vorbeschriebenen ergibt sich somit eine Endverzweiger-Anordnung für Signal-Uebertragungskabel, insbesondere aus Glasfaserleiter, die von grosser Universalität ist und neben einem optimalen Schutz des Steckerfeldes eine umfassende Handhabung insbesondere inbezug auf die Verbindung hochempfindlicher Leitermittel erlaubt, wobei auch bei einer Kompaktmontage im Gehäuse ohne weiteres ein Spleissen der Glasfaserleiter als auch ein individuelles Rangieren möglich ist, ohne dass am Glasfaserleiter mechanische und optische Störfaktoren auftreten können.

Es wird wie folgt Schutz beansprucht:

## Patentansprüche

1. Endverzweiger-Anordnung für Signal-Uebertragungskabel, insbesondere aus Glasfaserleiter, mit einer Mehrzahl Stecker in einem Steckerfeld zur steckbaren Verbindung von netzseitigen und anwenderseitigen Glasfaserleitern, dadurch gekennzeichnet, dass sich das Steckerfeld (10) in einem schwenkbar und herausnehmbar in einem Gehäuse (1) eingesetzten Rahmen (2) befindet, welcher Rahmen (2) beidseitig je eine netzseitige resp. anwenderseitige Mehrfach-Spleisskassette (3,3') trägt und begrenzte Raumabschnitte (4,4') für die Aufnahme von Glasfaserleiterreserven der mit den Steckern des Steckerfeldes (10) verbundenen Glasfasern (6,6') aufweist, wobei der im Gehäuse (1) eingesetzte Rahmen (2) mit der Gehäuserückwand (7) einen Raum (8) begrenzt zur schlaufen- resp. kreisförmigen Aufnahme von Glasfaser-Arbeits- resp. -Spleissreserven des netzseitigen Uebertragungskabels (12).

2. Endverzweiger-Anordnung nach Anspruch 1, dadurch gekennzeichnet, dass im Kabelreserven aufnehmenden Raum (8) Führungsschikanen (9) vorgesehen sind zur Parallelführung der zum Rahmen (2) hin verlaufenden Kabelabschnitte entlang der Rahmen-Schwenkachse.

3. Endverzweiger-Anordnung nach Anspruch 1, dadurch gekennzeichnet, dass das Gehäuse (1) ausserhalb des Rahmens (2) ein Auskreuzungsfach (13) für hindurchgeführte Netzstromkabel (14) aufweist.

4. Endverzweiger-Anordnung nach Anspruch 3, dadurch gekennzeichnet, dass sich im Auskreuzungsfach (13) Mittel (15) für den Endverschluss des Netzstromkabels (14) befinden.
